# EUROPÄISCHE PATENTSCHRIFT

(11) **EP 3 432 139 B1**
(45) Veröffentlichungstag und Bekanntmachung des Hinweises auf die Patenterteilung: **17.07.2024**
(21) Anmeldenummer: 18173712.3
(22) Anmeldetag: 17.01.2013
(51) Int. Cl.: G06F 8/30, G06F 8/35, G06F 8/41

(54) **COMPUTERIMPLEMENTIERTES VERFAHREN ZUM GENERIEREN VON COMPUTERPROGRAMMCODE**
A COMPUTER IMPLEMENTED METHOD FOR GENERATING COMPUTER PROGRAM CODE
PROCÉDÉ IMPLÉMENTÉ PAR ORDINATEUR DESTINÉ À GÉNÉRER DU CODE DE PROGRAMME INFORMATIQUE

(43) Veröffentlichungstag der Anmeldung: 23.01.2019
(62) Teilanmeldung aus: 13151712.0
(73) Patentinhaber: Generative Software GmbH, 79111 Freiburg (DE)
(72) Erfinder: Munzert, Marcus, 79111 Freiburg (DE); Rohmer, Heinz, 78176 Blumberg (DE)
(74) Vertreter: Linhart, Friedrich Karl Eberhard

(56) Entgegenhaltungen:
- EP-A1- 2 110 741
- EP-A1- 2 249 249
- EP-A2- 0 463 583
- "COMPILERS : PRINCIPLES, TECHNIQUES, AND TOOLS.", 1 January 1986, UPPER SADDLE RIVER, NJ : PRENTICE HALL., US, ISBN: 978-0-201-10194-2, article AHO ET AL: "Compilers. Principles, Techniques, and Tools", XP055238379, 031066
- THOMAS HETTEL ET AL: "Model Synchronisation: Definitions for Round-Trip Engineering", 1 July 2008, THEORY AND PRACTICE OF MODEL TRANSFORMATIONS; [LECTURE NOTES IN COMPUTER SCIENCE], SPRINGER BERLIN HEIDELBERG, BERLIN, HEIDELBERG, PAGE(S) 31 - 45, ISBN: 978-3-540-69926-2, XP019091838

## Beschreibung

### Technisches Gebiet

Die Erfindung betrifft ein computerimplementiertes Verfahren nach dem Oberbegriff des Anspruchs 1 sowie ein computerimplementiertes System und ein computerlesbares Medium nach den nebengeordneten Ansprüchen.

### Stand der Technik

Computerprogramme werden heutzutage nicht mehr ausschliesslich per Hand von Programmierern geschrieben, sondern können - zumindest teilweise - mit Hilfe von sogenannten Codegeneratoren automatisch erstellt werden. Hierdurch kann sich eine enorme Zeit- und Kostenersparnis gegenüber der manuellen Softwareerstellung ergeben. Die Verwendung solcher Codegeneratoren in Verfahren zur automatischen Generierung von Computerprogrammcode wird beispielsweise in der Druckschrift EP 2 249 249 B1 beschrieben.

Die bekannten Verfahren zur automatischen Generierung von Computerprogrammcode weisen jedoch noch Nachteile auf, welche die Effizienz und den den Nutzen der Codegeneratoren für Softwareentwickler zum Teil erheblich einschränken. Ein solcher Nachteil ist, dass es für Softwareentwickler bisher nicht möglich ist, die Arbeit der Codegeneratoren, welche letztere typischerweise in Form von wenigen Transformationen oder sogar nur einer einzigen Transformation verrichten, nach erfolgter Generierung retrospektiv derart zu durchschauen, dass Fehler bzw. Unstimmigkeiten im generierten Computerprogrammcode auf bestimmte Stellen im Codegenerator zurückgeführt werden können. Dieser mangelhafte Einblick in die Arbeit der Codegeneratoren ist auf der anderen Seite auch für Entwickler von Codegeneratoren nachteilig, weil er die Wartbarkeit der Codegeneratoren verunmöglicht oder zumindest sehr erschwert. Ein weiterer Nachteil ist die Tatsache, dass die bekannten Codegeneratoren oft eine grosse Anzahl an Transformationsschritten verwenden können, welche untereinander nicht ausreichend gut koordiniert und/oder schlecht wiederverwendbar sind.

### Aufgabe der Erfindung

Es ist die Aufgabe der Erfindung, ein computerimplementiertes Verfahren zum Generieren von Computerprogrammcode mit Hilfe eines Codegenerators bereitzustellen, welches die Nachteile des Stands der Technik ausräumt oder zumindest verringert und insbesondere eine Möglichkeit zur retrospektiven Visualisierung der Arbeit des Codegenerators für einen Softwareentwickler und/oder einen Codegenerator-Entwickler schafft.

### Lösung der Aufgabe

Diese Aufgabe wird erfindungsgemäss durch ein computerimplementiertes Verfahren zum Generieren von Computerprogrammcode nach Anspruch 1 gelöst.

Codemodell umfasst typischerweise mindestens eine, bevorzugt mehrere Quellcode-Datei(en) und/oder Konfigurationsdatei(en) und/oder sonstige Datei(en). Solche sonstigen Dateien können alle Dateien sein, die typischerweise bei der Softwareentwicklung erzeugt werden, also z. B. Dokumentation, Berichte, Anwendungen, pdf-Dateien oder Rechnungen.

Die Verwendung einer Laufzeitumgebung als "Form" zur Ausführung des Codegenerators, wobei die Laufzeitumgebung als Schnittstelle zwischen einem Generator-Client, also einer Benutzerprogramm eines Softwareentwicklers und dem Codegenerator agiert und zudem die Arbeit des Codegenerators in der Laufzeitumgebung überwacht, wird eine Möglichkeit zur retrospektiven Visualisierung der Arbeit des Codegenerators für einen Softwareentwickler und/oder einen Codegenerator-Entwickler geschaffen.

Bei einer bevorzugten Ausführungsform des Verfahrens wird während der letzten Transformation ein Generierungsprotokoll erstellt, bevorzugt durch die Laufzeitumgebung. Ein solches Generierungsprotokoll hat den Vorteil, dass es direkt zur retrospektiven Visualisierung der Arbeit des Codegenerators bei einer Codegenerierung durch den Softwareentwickler und/oder den Codegenerator-Entwickler genutzt werden kann. Das Generierungsprotokoll muss nicht zwangsläufig während der letzten Transformation erstellt werden, sondern kann prinzipiell auch während einer anderen Transformation oder zwischen zwei Transformationen oder auch abschnittsweise über den Generierungsprozess verteilt erstellt werden. Besonders vorteilhaft ist es zudem, wenn die erste Transformation und/oder die letzte Transformation durch die Laufzeitumgebung vorgegeben werden bzw. wird. Dies hat den Vorteil, dass ein Codegenerator-Entwickler, der die Spezifikation(en) der ersten und/oder der letzten Transformation der Laufzeitumgebung kennt, einen passenden Codegenerator für die Laufzeitumgebung erstellen kann. Prinzipiell ist es jedoch z. B. auch möglich, dass nicht die Laufzeitumgebung sondern der Codegenerator selbst die erste und/oder die letzte Transformation vorgibt.

Bei einer besonders vorteilhaften Ausführungsform wird der Codegenerator aus einer Mehrzahl verfügbarer Codegeneratoren derart ausgewählt, dass das Codemodell einer gewünschten Spezifikation, insbesondere einer gewünschten Programmiersprache, entspricht. Vorzugsweise werden hierzu im Verlauf des Verfahrens oder zu einem früheren Zeitpunkt unterschiedliche Codegeneratoren in die Laufzeitumgebung geladen. Die Auswahl wird typischerweise durch den Softwareentwickler, vorzugsweise in dem Generator-Client vorgenommen, und zwar derart, dass die Spezifikation bzw. Programmiersprache den jeweiligen Anforderungen des Softwareentwicklers entspricht. Wollte der Softwareentwickler also beispielsweise Java-Code erzeugen, so würde er aus der Mehrzahl der verfügbaren Codegeneratoren einen auswählen, der derart ausgebildet ist, dass er ausgehend von dem typischerweise formalisierten Ausgangsmodell Java-Code als Ausgangsprodukt erstellen kann. Die Auswahlmöglichkeit aus einer Mehrzahl an Codegeneratoren hat für den Softwareentwickler den Vorteil, dass es ihm durch das Zusammenspiel zwischen einem einzigen Generator-Client, einer einzigen Laufzeitumgebung und einer Mehrzahl an Codegeneratoren ermöglicht wird, mit einem einzigen Verfahren unterschiedliche Arten von Computerprogrammcode zu erzeugen. Im Gegensatz dazu müsste ein solcher Softwareentwickler bei der separaten Nutzung unterschiedlicher Codegeneratoren - also ohne einheitliche Laufzeitumgebung - die Bedienung jedes einzelnen Codegenerators für sich genommen erlernen. Durch die Erfindung bietet sich nach einem Erlernen der Bedienung der einheitlichen Laufzeitumgebung viel einfacher ein Zugang zu unterschiedlichen Codegeneratoren. Ein weiterer Vorteil dieser bevorzugten Ausführungsform ist die Tatsache, dass durch die Verwendung unterschiedlicher - schlankerer - Codegeneratoren anstelle eines einzigen - umfangreichen - Codegenerators, welcher sich z. B. zum Erzeugen von Computerprogrammcode unterschiedlicher Programmiersprachen eignen könnte, eine grössere Modularität des Verfahrens erreicht wird, was auch die Transparenz des Verfahrens und die retrospektive Visualisierung der Arbeit der Codegeneratoren erleichtert.

Bei einem bevorzugten Verfahren wird bzw. werden das Startmodell und/oder das Zwischenmodell und/oder das Endmodell während des Ablaufs des Verfahrens in einen flüchtigen Speicher geschrieben. Die Speicherung der Modelle dient der späteren Visualisierung des Generierungsprozesses, die Verwendung eines flüchtigen Speichers verbessert die Effizienz des Verfahrens. Es könnte jedoch auch ein permanenter Speicher benutzt werden. Besonders bevorzugt ist es, wenn das Startmodell und/oder das Zwischenmodell und/oder das Endmodell nach der Umwandlung des Endmodells in das Codemodell zu Analysezwecken in dem flüchtigen Speicher vorgehalten werden. Ein solches Vorhalten hat den Vorteil, dass die Modelle nicht während des Verfahrens bzw. direkt im Anschluss an das Verfahren, z. B. bei Erstellung des Generierungsprotokolls, aufbereitet werden müssen, weil sie sonst nicht mehr verfügbar sind, sondern dass sie erst bei Bedarf in eine retrospektive Analyse des Generierungsprozesses eingebunden werden, wenn sich dies als notwendig erweist. Durch diese Möglichkeit zur bedarfsorientierten Auswertung wird die Schnelligkeit und die Effizienz des Verfahrens verbessert.

Bei vorteilhaften Ausführungsformen wird jede Transformation durch ein entsprechendes Transformationsmodul ausgeführt, wobei der Codegenerator der Laufzeitumgebung vorzugsweise eine Definition und/oder eine Reihenfolge und/oder einen Typ der von ihm genutzten Transformationsmodule übermittelt. Dies hat den Vorteil, dass die Ausführung der Transformationen des Codegenerators bzw. der Codegeneratoren weitestmöglich standardisiert ist und dass die Laufzeitumgebung genaue Informationen darüber erhält, was jeder Codegenerator im einzelnen für Transformationsschritte unternimmt. Beides kommt der besseren Visualisierung der Arbeit des Codegenerators bzw. der Codegeneratoren zugute. Es ist jedoch auch eine andere Organisation des Ablaufs der Transformationsschritte möglich; ausserdem könnte die Laufzeitumgebung die von jedem Codegenerator durchgeführten Transformationen bzw. genutzten Transformationsmodule z. B. erst zur Laufzeit erfassen und entsprechend archivieren.

Bei einem besonders bevorzugten Verfahren nutzt jedes Transformationsmodul eine Mehrzahl an Element-Transformationen, wobei jeder Element-Transformation ein Modellelement des Ausgangsmodells oder des Startmodells oder des Zwischenmodells oder des Endmodells als Eingangsparameter vorgegeben wird, und wobei jede Element-Transformation ein Modellelement des Startmodells oder des Zwischenmodells oder des Endmodells oder des Codemodells als Ausgangsparameter liefert. Eine solcher modularer Aufbau der Transformationsmodule hat den Vorteil, dass die Möglichkeit zur nachträglichen Visualisierung der Arbeit der Codegeneratoren sowie die Wartbarkeit des Verfahrens und/oder des Codegenerators bzw. der Codegeneratoren weiter verbessert wird. Es ist auch möglich, dass ein Transformationsmodul lediglich eine einzige solche Element-Transformation nutzt.

Besonders vorteilhaft ist es, wenn jedem neuen Modellelement eine Referenz auf das alte Modellelement, aus dem es mittels der Element-Transformation erzeugt wurde, zugeordnet wird. Es können auch mehrere neue Modellelemente aus einem alten Modellelement entstehen oder umgekehrt, wobei dann eine Mehrzahl an Referenzen gebildet wird. Diese Referenzen können vorteilhafterweise zur Auswertung bzw. Visualisierung des Verfahrensablaufs bzw. der Arbeit des Codegenerators bzw. der Codegeneratoren verwendet werden, insbesondere bei der Erstellung des Generierungsprotokolls. Die Referenzen werden vorzugsweise in der Laufzeitumgebung und nicht in den Modellelementen selbst vorgehalten, eine andere Lösung ist jedoch durchaus denkbar.

Laut Anspruch 1 wird beim Ablauf des Verfahrens ein altes Codemodell, welches bei einem früheren Ablauf des Verfahrens erzeugt wurde und in welches nach seiner Erzeugung zumindest stellenweise Modifikationen eingefügt wurden, derart berücksichtigt, dass die Modifikationen in dem durch das Verfahren erzeugten neuen Codemodell erhalten bleiben. Dies hat den Vorteil, dass z. B. ein Softwareentwickler auf eine Situation, in welcher er durch das Verfahren einen zumindest teilweise fehlerhaften oder unvollständigen Computerprogrammcode geliefert bekommt, derart reagieren kann, dass er von Hand Änderungen einfügt und diese dann bei einer nochmaligen Anwendung des Verfahrens in einem neuen Codemodell wieder enthalten sind. Zudem ist es so möglich, dem Verfahren bzw. dem Codegenerator oder den Codegeneratoren dadurch ein iteratives Lernen zu ermöglichen, dass ihnen die Möglichkeit gegeben wird, das erzeugte Codemodell mit einem eigentlich gewünschten Codemodell zu vergleichen.

Besonders vorteilhaft ist es, wie im Anspruch 1 erläutert, wenn das alte Codemodell am Anfang des Verfahrens geparst wird, typischerweise mit Hilfe eines geeigneten Parsers oder eines Parsermoduls der Laufzeitumgebung, so dass eine alte Version des Endmodells entsteht, wobei für jedes Modellelement dieser alten Version des Endmodells temporär eine alte Modellversion entsteht, welche zumindest eine entsprechende Modifikation enthält, falls sich die Modifikationen auf das jeweilige Modellelement ausgewirkt haben.

Laut Anspruch 1 wird während der letzten Transformation bzw. im letzten Transformationsschritt jeweils eine alte Modellversion der alten Version des Endmodells mit dem entsprechenden Modellelement des neuen Endmodells verglichen, so dass im neuen Codemodell die Modifikationen berücksichtigt werden. Dieses spezielle Vorgehen ermöglicht eine besonders effiziente und schnelle Berücksichtigung des Modifikationen in dem neuen Codemodell.

Bei einem besonders bevorzugten Verfahren wird im Generierungsprotokoll zumindest ein Verfahrensschritt des erfindungsgemässen Verfahrens mit einem entsprechenden Ergebnis und/oder zumindest eine Referenz und/oder zumindest eine Modifikation abgespeichert. Dies hat den Vorteil, dass das Generierungsprotokoll dem Entwickler des Codegenerators oder anderen Interessierten, z. B. dem Softwareentwickler, genauen Einblick in das Verfahren, speziell in dessen Ablauf und/oder in die Arbeit zumindest eines Codegenerators geben kann. Besonders bevorzugt ist es, wenn im Generierungsprotokoll alle Verfahrensschritte des Verfahrens abgespeichert werden. Es ist jedoch auch möglich, im Generierungsprotokoll beispielsweise lediglich verweise auf Speicherbereiche, insbesondere Speicherbereiche im flüchtigen Speicher, abzuspeichern, in denen die entsprechenden Informationen abgelegt sind.

Bei einer besonders bevorzugten Ausführungsform des erfindungsgemässen Verfahrens wird ein und dasselbe Transformationsmodul in unterschiedlichen Transformationen genutzt und/oder der Codegenerator bzw. zumindest ein Codegenerator nutzt ein Transformationsmodul eines anderen Codegenerators aus der Mehrzahl der verfügbaren Codegeneratoren. Dies hat den Vorteil, dass die Codegeneratoren klein und damit übersichtlich gehalten werden, weil es im Prinzip genügt, wenn jedes Transformationsmodul nur ein einziges mal in der Laufzeitumgebung vorhanden ist. Zudem wird so die Entwicklung von zusätzlichen Codegeneratoren für die Nutzung in der Laufzeitumgebung bzw. in dem Verfahren erleichtert, weil sich der dabei anfallende Programmieraufwand durch das "Recycling" bereits vorhandener Transformationsmodule reduziert. Aus der Wiederverwendbarkeit der Transformationsmodule ergibt sich weiterhin eine Verringerung des Speicherbedarfs für das Verfahren, eine verbesserte Effizienz, eine grössere Schnelligkeit und insbesondere eine zuverlässigere und einfachere nachträgliche Visualisierbarkeit des Verfahrensablaufs bzw. der Arbeit des Codegenerators und/oder der Codegeneratoren.

Bei einer typischen Ausführungsform werden die Modelle basierend auf an die Laufzeitumgebung übermittelten Metamodellen erzeugt. Solche Metamodelle werden der Laufzeitumgebung typischerweise durch die jeweiligen Codegeneratoren übermittelt.

Ein erfindungsgemässes computerimplementiertes System ist typischerweise geeignet, zumindest einen Verfahrensschritt des erfindungsgemässen Verfahrens auszuführen. Ein Beispiel für ein solches computerimplementiertes System könnte eine Laufzeitumgebung, insbesondere mit zumindest einem Codegenerator, bevorzugt einer Mehrzahl an Codegeneratoren, sein, welches zudem typischerweise einen Generator-Client und/oder eine Schnittstelle zum Einspielen von Codegeneratoren in die Laufzeitumgebung umfasst.

Ein erfindungsgemässes computerlesbares Medium, enthält typischerweise Instruktionen zum Steuern und/oder Regeln eines des erfindungsgemässen computerimplementierten Systems. Ein solches Medium kann z. B. eine Festplatte, ein sonstiger Datenträger oder eine Cloud sein, wobei sich das Medium insbesondere auch aus mehreren, typischerweise räumlich voneinander getrennten, Teilmedien zusammensetzen kann.

### FIGURENBESCHREIBUNG

Nachfolgend wird die Erfindung mit Hilfe von Diagrammen und Zeichnungen näher beschrieben, wobei zeigen:
- Figur 1:: Schematische Übersicht über das Verfahren;
- Figur 2:: Durch das Verfahren genutzte Modelle und Metamodelle
- Figur 3:: Schematische Übersicht der Arbeit von erfindungsgemässen Transformationen;
- Figur 4:: Schematische Darstellung der letzten Transformation;
- Figur 5:: Schematische Darstellung der Berücksichtigung einer manuellen Änderung durch das Verfahren;
- Figur 6:: Weitere schematische Darstellung der Berücksichtigung einer manuellen Änderung durch das Verfahren;
- Figur 7:: Schematische Darstellung der Wiederverwendung von Transformationsmodulen in erfindungsgemässen Transformationen;
- Figur 8:: Transformationsmodule mit ihren Element-Transformationen;
- Figur 9:: Schematischer Überblick über die Arbeit von Element-Transformationen;
- Figur 10:: Weitere schematische Übersicht über das Verfahren; und
- Figur 11:: Beispiel eines Codegenerators für die Java Persistence Architecture (JPA).

### Beschreibung bevorzugter Ausführungsbeispiele

Ein Ausführungsbeispiel der Erfindung ist ein computerimplementiertes Verfahren zur Überwachung und Analyse von modellbasierten Transformationen, die auf einem Computersystem ablaufen und der Erstellung von Quellcode- und Konfigurations-Dateien dienen (sogenannte Codegenerierung). Das Verfahren ermöglicht es, den Prozess der Codegenerierung derart in Einzelschritte zu unterteilen, dass jeder einzelne Verarbeitungsschritt sichtbar, überschaubar und kontrollierbar wird. Aus dem Verfahren ergibt sich auch der direkte Zugriff auf sämtliche Zwischenergebnisse aller Schritte. Der letzte Verarbeitungsschritt des Verfahrens - die Erstellung von Dateien - ist so gestaltet, dass das Verfahren sämtliche manuellen Änderungen in zuvor bereits einmal generierten Dateien berücksichtigen und erhalten kann, ohne dass der Nutzer des Verfahrens bei seinen Änderungen die Tatsache der generativen Erzeugung berücksichtigen muss (nicht-invasives Verfahren zur Erhaltung manueller Änderungen in automatisch erzeugten Dateien).

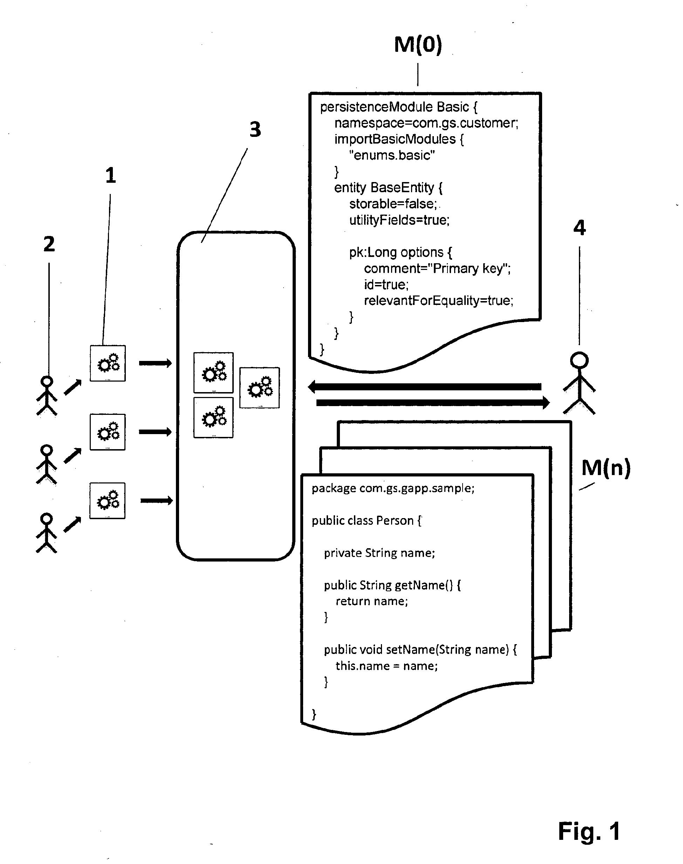

Figur 1 gibt eine schematische Übersicht über das Verfahren. Das Verfahren nutzt Codegeneratoren 1 zur Codegenerierung. Codegenerator-Entwickler 2 entwickeln diese Codegeneratoren 1 nach durch das Verfahren vorgegebenen Regeln. Die Codegeneratoren 1 implementieren das Verfahren nicht selbst, sondern werden auf ein Computersystem gebracht, auf dem ein Programm ausgeführt wird, welches das Verfahren implementiert. Dieses Programm ist die Laufzeitumgebung 3 des Verfahrens. Für die Anwender der Codegeneratoren 1, im folgenden als Softwareentwickler 4 bezeichnet, bleibt die Funktionsweise des Verfahrens verborgen. Sie senden Aufträge in Form von Ausgangsmodellen M(0) an die Laufzeitumgebung 3 und profitieren von den durch das Verfahren gesammelten Daten und erzeugten Codedateien in Form von Codemodellen M(n). Den Codegenerator-Entwicklern 2 ermöglicht das Verfahren eine standardisierte, einfache, effektive Entwicklung von Codegeneratoren 1.

Im Folgenden werden zunächst Begriffe definiert und Zusammenhänge hergestellt, die notwendig sind, um das Verfahren verständlich beschreiben zu können. Modelle werden im Folgenden prinzipiell mit dem Bezugszeichen M bezeichnet, wobei wo nötig zusätzlich eine Ordnungsnummer des Modells in Klammern angegeben ist. Beispielsweise wird ein Ausgangsmodell immer als M(0) bezeichnet, ein Codemodell immer mit M(n). Ähnliches gilt für Modellelemente (prinzipiell Bezugszeichen E), und Transformationen (prinzipiell Bezugszeichen T).

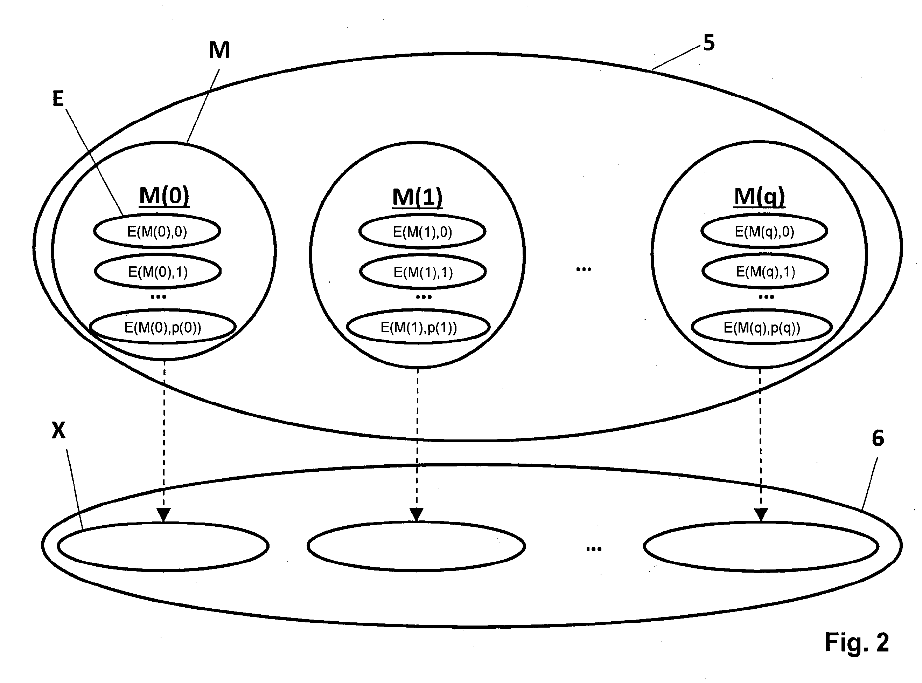

Wie in Figur 2 dargestellt, kommen in dem Verfahren mehrere, unterschiedliche Modelle M(0) bis M(q), wobei q in diesem Fall als willkürlich gewählte natürlich Zahl zu verstehen ist, zum Einsatz. Alle diese Modelle M(0) bis M(q) des Verfahrens bilden eine Modellmenge 5. Jedes der Modelle M(0) bis M(q) besteht dabei aus einer Anzahl p an Modellelementen E. Um Modellelemente E in der Modellmenge 5 des Verfahrens eindeutig bezeichnen zu können, bekommt jedes der Modelle M(0) bis M(q) eine eindeutige Bezeichnung M(i). Im in Figur 2 gezeigten Fall, wo die Anzahl der Modelle M(0) bis M(q) also q+1 (alternativ kann in der Figur 2 das letzte Modell als M(q-1) bezeichnet werden) ist, gilt dann 0 <= i <= q. Dann ist jedes Modellelement E eindeutig gekennzeichnet mit E(M(i),j), wobei 0 <= j < p(i).

Ferner ist in Figur 2 dargestellt, dass zu jedem Modell M auch noch ein dazu passendes Metamodell X gehört, worin jeweils die Typen der Modellelemente E und deren Abhängigkeiten untereinander definiert sind. Die im nachfolgenden beschriebenen Transformationen T kennen die Metamodelle X, sie arbeiten mit den Metamodellen X. Zu einem Metamodell X kann es beliebig viele Modelle M geben, die auf dem Metamodell X basieren. Metamodelle X werden der Laufzeitumgebung 3 als Metamodell-Module bereitgestellt. Alle Metamodelle X zusammen bilden eine Metamodellmenge 6 des Verfahrens.

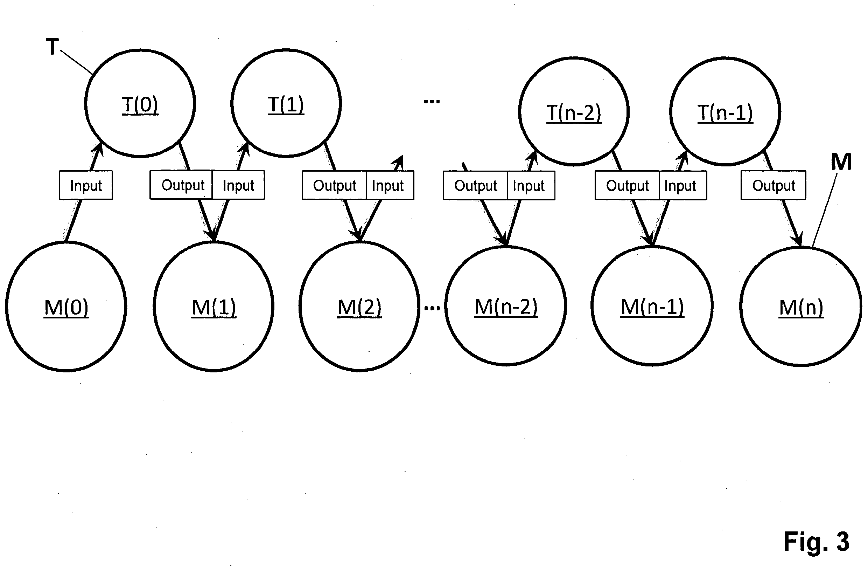

Figur 3 ist eine schematische Übersicht des erfindungsgemässen Verfahrens, bei dem mit Hilfe einer Mehrzahl an Transformationen T(0) bis T(n-1) aus einem Ausgangsmodell M(0) ein Codemodell M(n) generiert wird. Konkret wird dabei aus dem Ausgangsmodell M(0) mit Hilfe einer ersten Transformation T(0) ein Startmodell M(1) erzeugt. Dabei wird durch die erste Transformation T(0) vorteilhafterweise ein erster Objekt-Graph erzeugt. Ein Objekt-Graph ist hier eine Menge von Modellelementen und deren Beziehungen untereinander. Anschliessend werden mit Hilfe einer Mehrzahl von Zwischentransformationen T(1) bis T(n-3) Schritt für Schritt eine Mehrzahl an Zwischenmodellen M(2) bis M(n-2) erzeugt. Jede Zwischentransformation T(1) bis T(n-3) führt dabei vorzugsweise eine Graph-Transformation aus. Schliesslich wird durch eine vorletzte Transformation T(n-2) aus dem letzten Zwischenmodell M(n-2) ein Endmodell M(n-1) erzeugt. Aus diesem wird dann mit Hilfe einer letzten Transformation T(n-1) das Codemodell M(n) erzeugt.

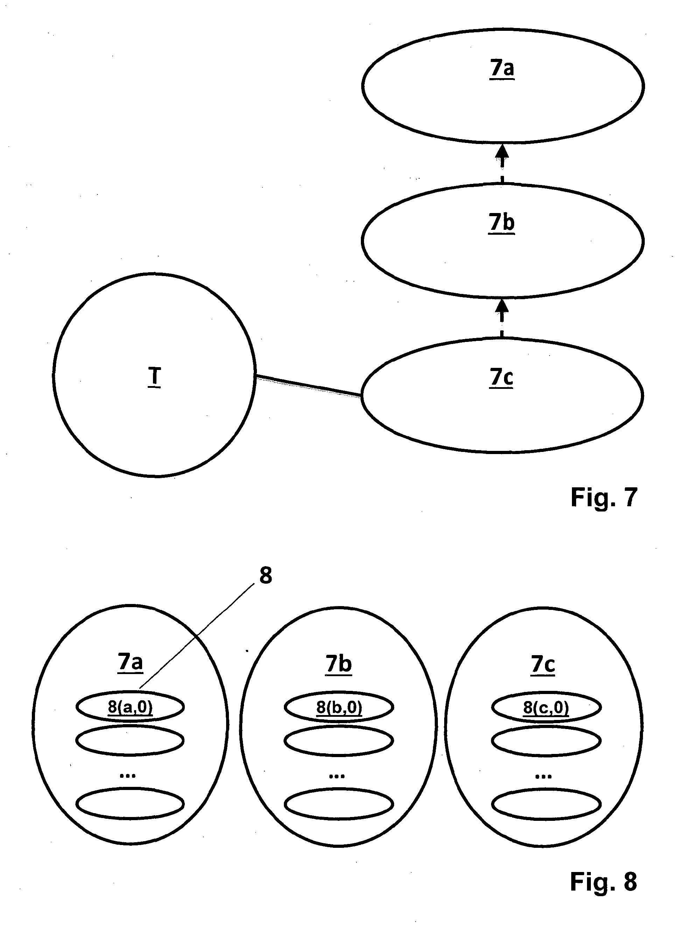

Das Ausgangsmodell M(0) und eine Menge von Quellcode- und Konfigurations-Dateien (nicht gezeigt), die in einer vorhergehenden Codegenerierung bereits erzeugt und möglicherweise manuell verändert worden waren, dienen dabei vorteilhafterweise als Eingabe für n Transformationsmodule 7 (in Figur 3 nicht dargestellt, wohl aber in Figur 7, wobei Figur 7 eigentlich nur die Wiederverwendung existierender Transformationsmodule zeigt). Jedes Transformationsmodul 7 führt genau eine Transformation T aus. Ein Codegenerator 1 entspricht im Prinzip einer Menge von verketteten Transformationsmodulen 7. Die Verkettung kann auch in der Form eines Baumes realisiert werden, zur Vereinfachung der Beschreibung wird im Folgenden jedoch stets eine einfache Verkettung als einzelner Ast betrachtet.

Das Ausgangsmodell M(0) liegt in formalisierter Form vor, beispielsweise textuell, in grafischer Darstellung eines Modellierungswerkzeuges, in gesprochener Sprache oder in Form von Bildern. Das durch die erste Transformation T(0) aus dem Ausgangsmodell M(0) erzeugte Startmodell M(1) liegt bevorzugt als Objekt-Graph vor. Ergebnis der Transformationen T ist stets ein neues oder verändertes Modell M. Jede Transformation T(i), 0 <= i < n, hat als Input das Modell M(i) und als Output das Modell M(i+1). Das Transformationsmodul 7 (in Figur 3 nicht dargestellt, wohl aber in Figur 7), das der Transformation T(i) zugrunde liegt, muss die Metamodelle X(i) und X(i+1) der Modelle M(i) und M(i+1) kennen.

Bei n Transformationen T gibt es insgesamt n+1 Modelle M. In der n-ten Transformation T, der so genannten letzten Transformation T(n-1), wird aus dem Endmodell M(n-1) das Codemodell M(n). M(n) liegt meistens im Textformat vor, es sind aber auch binäre Formate möglich. Die Zwischenmodelle M(1) bis M(n-2) und das Endmodell M(n-1) sind nur im flüchtigen Speicher vorhanden, werden jedoch nach Beendung der Generierung dort nicht gelöscht, da sie noch für Analysezwecke genutzt werden.

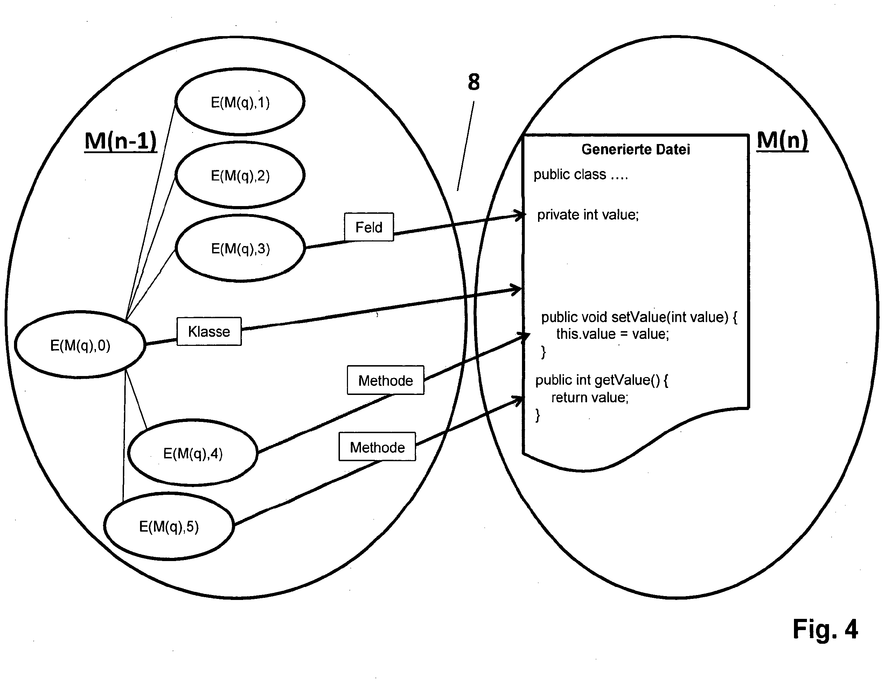

Das Ergebnis der letzten Transformation T(n-1) sind Quellcode- und Konfigurations-Dateien, im Folgenden Codedateien genannt, welche in ihrer Gesamtheit das Codemodell M(n) bilden. Diese Codedateien dienen der Softwareentwicklung. Die letzte Transformation T(n-1) ist stets so gestaltet, dass das Endmodell M(n-1) genau dieselbe strukturelle Information enthält wie das Codemodell M(n). In Figur 4 ist ein typisches Ausführungsbeispiel des Endes eines erfindungsgemässen Verfahrens gezeigt, bei welchem durch eine letzte Transformation T(n-1), in Figur 4 durch eine Mehrzahl an Element-Transformationen 8 dargestellt, aus einem Endmodell M(n-1) mit einer Mehrzahl an Modellelementen E ein Codemodell M(n) in Form einer Klasse gebildet wird, welche unter anderem ein Feld und zwei Methoden umfasst. Die Klasse, das Feld und die beiden Methoden werden dabei durch jeweils eine Element-Transformation 8 aus jeweils einem Modellelement E gebildet.

In einer Element-Transformation 8 wird - allgemein gesprochen und nicht notwendigerweise in Bezug auf Figur 4 - die Erzeugung eines neuen Modellelements E stets durch ein bereits existierendes Modellelement E ausgelöst. Diese Element-Transformation 8 wird immer durch einen bestimmten, passenden Element-Transformator (in Figur 4 nicht explizit dargestellt) durchgeführt. Die Laufzeitumgebung 3 findet die passenden Element-Transformatoren für ein existierendes Modellelement E, indem sie den Typ des gegebenen Modellelements E und den Element-Transformator analysiert. Die Laufzeitumgebung 3 merkt sich bei allen durchgeführten Element-Transformationen 8 die beteiligten Modellelemente E und den Namen des durchführenden Element-Transformators.

Innerhalb der letzten Transformation T(n-1) werden bei dem Verfahren auch detaillierte Daten in Form eines Generierungsprotokolls gesammelt, die festhalten, welche Zeichenfolge in einem Codemodell M(n) von welchem Programmcode des letzten Transformationsmoduls 7 geschrieben werden. Diese Informationen werden dazu verwendet, dass ein Codegenerator-Entwickler 2 sich im Code seines Codegenerators 1 besser zurechtfindet und damit bei durch die Generierung verursachten Fehlern in den generierten Codedateien die Ursache durch den Codegenerator-Entwickler 2 oder den Softwareentwickler 4 schneller und leichter gefunden werden kann.

Für jedes strukturelle Modellelement E in einer Codedatei bzw. einem Codemodell M(n) (z.B. Klasse, Methode, Operation, Feld, Attribut) existiert auch ein entsprechendes Modellelement E im Endmodell M(n-1). Und für jede generierte Codedatei existiert genau ein Modellelement E im Endmodell M(n-1), welches diese Codedatei repräsentiert. Das Verfahren beinhaltet, dass eine zuvor bereits einmal generierte Codedatei zuerst geparsed wird, bevor sie neu geschrieben/generiert wird. Dadurch entsteht temporär eine zweite Version des Modellelements E, nämlich E'. Diese zweite Version des Modellelements E beinhaltet die manuellen Änderungen, die an der zuvor bereits einmal generierten Quellcode- oder Konfigurationsdatei vorgenommen worden sind. Das Modellelement E, und damit auch das Modell M, welches das Modellelement E beinhaltet, werden automatisch so modifiziert, dass die letzte Transformation T(n-1) eine Codedatei bzw. ein Codemodell M(n) erzeugt, welche(s) sämtliche manuelle Änderungen beinhaltet.

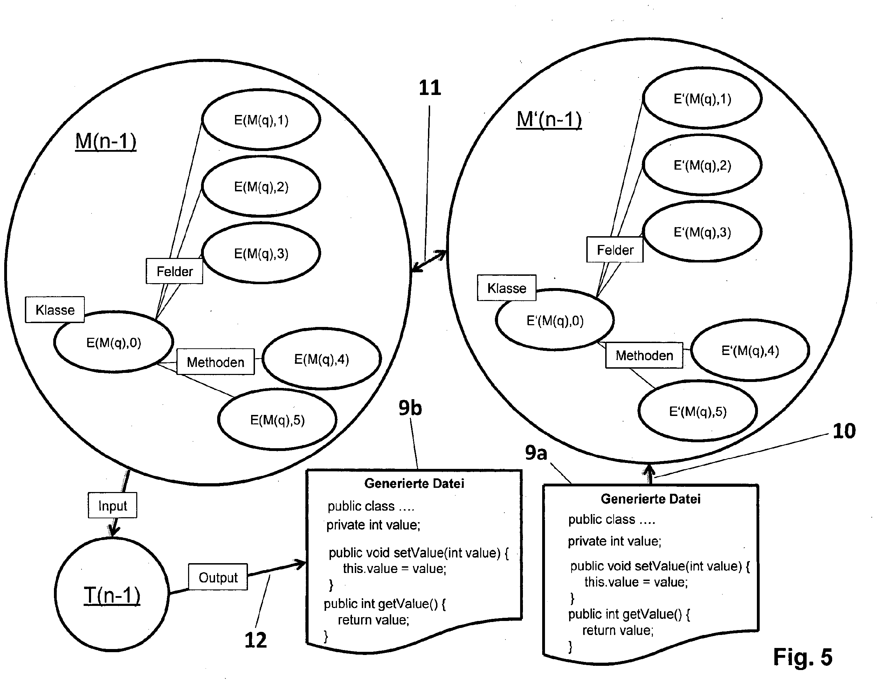

In Figur 5 ist diese Berücksichtigung von manuellen Änderungen an einer durch das Verfahren erzeugten Codedatei 9a gezeigt. In einem ersten Teilschritt 10 wird die zuvor generierte Codedatei 9a geparsed, wodurch eine zweite Version M'(n-1) des Endmodells M(n-1), welches zu der Codedatei 9a geführt hat, erzeugt wird, typischerweise temporär. In einem zweiten Teilschritt 11 werden die Endmodelle M'(n-1) und M(n-1) verglichen, um herauszufinden, wie das Original-Modell verändert werden muss, damit die nachfolgende letzte Transformation T(n-1) manuelle Änderungen in der zuvor generierten Codedatei 9a auch in einer in einem dritten Teilschritt 12 neu erzeugten Codedatei 9b erhält. Die Funktionalität des Vergleichens ist Teil von dem Transformationsmodul 7, welches die letzte Transformation T(n-1) ausführt, welche als Ergebnis Dateien mit Syntax von Programmiersprachen oder Beschreibungssprachen (z. B. XML) liefert.

Als Vorbereitung für den Umgang mit manuellen Änderungen in generiertem Code, wird der gesamte generierte Code, inklusive eventueller manueller Änderungen darin, geparst, wodurch ein Modell M'(n-1) entsteht. Das dem Modell M'(n-1) zugrundeliegende Metamodell muss dabei nicht dasselbe sein wie das, das dem Modell M(n-1) zugrunde liegt.

Für den weiter unten beschriebenen Fall 2 ist es notwendig, Code im flüchtigen Speicher zur Verfügung zu haben, der durch eine Generierung des Modells M(n-1) entstehen würde, wenn es keinerlei manuelle Änderungen gäbe. Es ist zum Beispiel der Inhalt von Methodenrümpfen nicht in M(n-1) enthalten, sondern in M(n). Diesen von manuellen Änderungen freien Code gibt es in zwei verschiedenen Ausführungen. Einmal als Ergebnis der Generierung für das aktuelle Modell M(n-1) (dieses Codemodell sei Mₐₖₜᵤₑₗₗ(n)) und einmal als Ergebnis für dasjenige Modell, das bei der vorigen Generierung des aktuellen Codes genutzt wurde (dieses Codemodell nennen wir M_{zuvor}(n)).

Als nächster Schritt wird festgestellt, welche Elemente in M'(n-1), nicht aber in M(n-1) vorkommen. Diese Menge nennen wir die Menge der neuen Elemente. Während diese Menge von Elementen in M'(n-1) festgestellt wird, werden auch Element-Paare mit je einem Element aus M(n-1) und einem aus M'(n-1) ermittelt, für die gilt, dass sie dasselbe Element in generiertem Code repräsentieren.

Auf Basis der genannten Vorbereitungen werden Änderungen an M(n-1) vorgenommen. Nachfolgend werden die verschiedenen Fälle von möglichen manuellen Codeänderungen in M(n) und die dazu jeweils passende Vorgehensweise für Änderungen an M(n-1) beschrieben. Dies ist die Liste der Fälle:
- Fall 1:: Hinzufügen neuer Elemente
- Fall 2:: Änderung von Eigenschaften im Code existierender Elemente
a. Für Elemente, die im Modell M(n-1) nicht existieren
b. Für Elemente, die im Modell M(n-1) existieren
- Fall 3:: Löschen von im Code existierenden Elementen
a. Für Elemente, die im Modell M(n-1) nicht existieren
b. Für Elemente, die im Modell M(n-1) existieren
- Fall 4:: Umbenennen bereits existierender Elemente
a. Für Elemente, die im Modell M(n-1) nicht existieren
b. Für Elemente, die im Modell M(n-1) existieren

Im Fall 1 wird in M(n-1) ein neues Element erzeugt und dort in das Objekt-Netz eingefügt. Gleichzeitig entsteht dadurch ein neues Element-Paar, wie weiter oben beschrieben. Es ist darauf zu achten, dass das neue Element Referenzen zu anderen Elementen aus M(n-1) erhält, so dass diese Referenzen den Referenzen des entsprechenden Elements aus M'(n-1) entspricht.

Im Fall 2 kann die Laufzeitumgebung bei unterschiedlichen Werten für Eigenschaften von Elementen eines Element-Paares eine von drei möglichen Entscheidungen treffen:
1. Der Wert im Element aus M(n-1) bleibt wie er ist
2. Der Wert im Element aus M(n-1) wird durch den Wert im Element aus M`(n-1) ersetzt
3. Die Werte in den beiden Elementen werden aneinander gehängt. Dies geht normalerweise nur bei textuellen Werten.

An dieser Stelle muss festgelegt werden, für welche Elemente und Eigenschaften welche der drei Entscheidungen getroffen wird. Diese Festlegung kann zusätzlich durch Merkmale der Eigenschaft selbst gesteuert werden. Ein Beispiel für die Entscheidung 1 ist die Dokumentation einer Methode. Ein Beispiel für die Entscheidung 2 ist der Inhalt eines Methodenrumpfes, wenn der Methodenrumpf, der aus M(n-1) generiert werden würde, nicht mehr als eine Zeile enthält, die weiter oben genannten Codemodelle Mₐₖₜᵤₑₗₗ(n) und M_{zuvor}(n) werden dazu genutzt, herauszufinden, welche der drei möglichen Entscheidungen getroffen wird.

Wenn manuelle Elemente aus generiertem Code heraus gelöscht werden (obiger Fall 3), dann wird diese Änderung im Fall 3.b *nicht* erhalten. Die nächste Generierung stellt den gelöschten Code wieder her. Im Fall 3.a bleibt die Löschung jedoch bestehen.

Im Code umbenannte Elemente erscheinen im Fall 4.b durch die Erhaltung manueller Änderungen als neue Elemente in M(n-1). Die nächste Generierung erzeugt zusätzlich diejenigen Element im Code, die vor der Umbenennung bereits existierten. Im Fall 4.a bleiben die umbenannten Elemente im generierten Code erhalten und es gibt keine weiteren, zusätzlichen Elemente im Code.

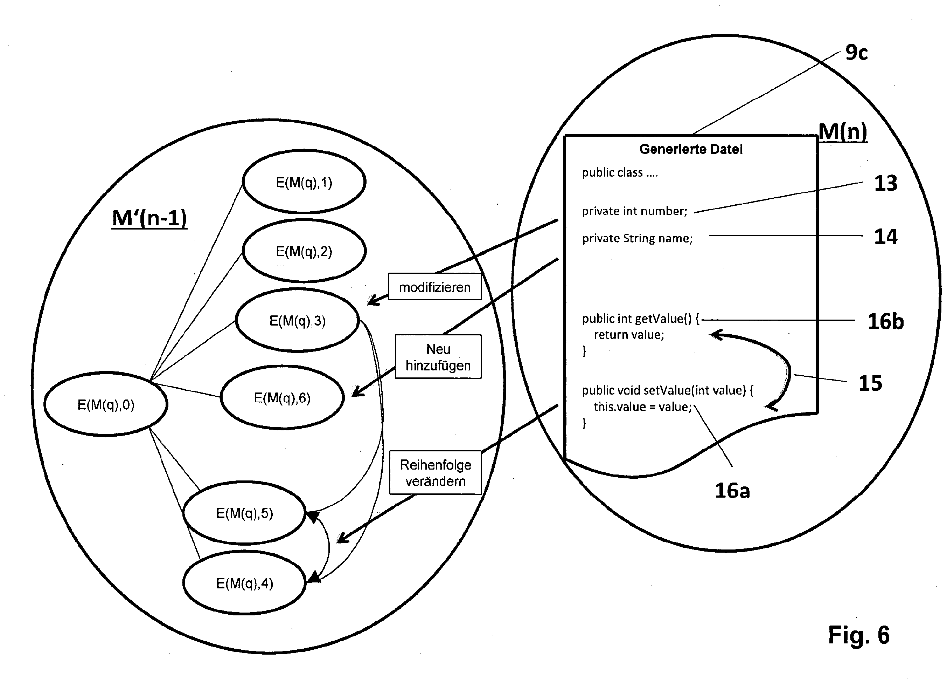

In Figur 6 ist beispielhaft gezeigt, wie sich manuelle Änderungen an einem Codemodell M(n) auf ein Endmodell M(n-1) auswirken. In der Codedatei 9c des Codemodells M(n) wurden drei Änderungen vorgenommen, nämlich eine Inhaltsänderung 13 - das Wort "value" aus Codedatei 9a in Figur 5 wurde durch das Wort "number" ersetzt, eine Hinzufügung 14 - die Worte "private String name" wurden hinzugefügt - und eine Reihenfolgenänderung 15 - die Reihenfolge zweier Textbausteine 16a, 16b wurde vertauscht. Diese manuellen Änderungen werden durch das erfindungsgemässe Verfahren derart berücksichtigt, dass, um der Inhaltsänderung 13 Rechnung zu tragen, in einem entsprechenden Modellelement E(M(q),3) des Endmodells M(n-1) ebenfalls eine Inhaltsänderung durchgeführt wird, dass, um der Hinzufügung 14 Rechnung zu tragen, ein entsprechendes Modellelement E(M(q),6) an eine der Hinzufügung entsprechenden Stelle in die Struktur der Modellelemente E des Endmodells M(n-1) hinzugefügt wird, und dass, um der Reihenfolgenänderung 15 Rechnung zu tragen, die Reihenfolge der Modellelemente E(M(q),4) und E(M(q),5), welche den in der Codedatei 9c vertauschten Textbausteinen 16a, 16b entsprechen, in der Struktur der Modellelemente E des Endmodells M(n-1) analog vertauscht werden.

In Figur 7 ist die Beziehung zwischen einer Transformation T und drei Transformationsmodulen 7a, 7b und 7c verdeutlicht. Ein Transformationsmodul 7 ist ein Programm, das die im Folgenden noch näher beschriebenen Element-Transformationen 8 (in Figur 7 nicht gezeigt) implementiert. Ein Transformationsmodul 7 kann von weiteren Transformationsmodulen 7 abhängig sein und deren Funktionalität wiederverwenden. In Figur 7 ist das Transformationsmodul 7c von den Transformationsmodulen 7b und 7a abhängig und verwendet deren Funktionalität zumindest teilweise wieder. Die Wiederverwendung ist in Figur 7 durch die gestrichelten Pfeile dargestellt. Eine Transformation T ist ein Kettenglied einer Transformationskette. Eine Transformation T führt die Element-Transformationen 8 von einem oder - durch Wiederverwendung - mehreren Transformationsmodulen 7 aus.

Jedes Transformationsmodul 7 nutzt eine Anzahl m an Element-Transformationen 8. In Figur 8 sind die Transformationsmodule 7a, 7b und 7c gezeigt, von denen jedes m Element-Transfomationen 8 - welche durch nachgestellte Klammern näher benannt sind - enthält. Die Anzahl m muss nicht unbedingt für alle im Verfahren genutzten Transformationsmodule 7 gleich sein. Im Laufe des erfindungsgemässen Verfahrens bekommt vorteilhafterweise jede Element-Transformation 8(T(i),j), 0 <= j < m, welche im Verfahren benutzt wird, ein Modellelement E(M(k1),11) als Input und gibt ein Modellelement E(M(k2),l2) zurück. Ein Modellelement E(M(k2),l2) erhält schliesslich eine Referenz auf das Modellelement E(M(k1),11), bis hin zum jeweiligen Modellelement E(M(k1),11) für das gilt k1=0 gilt und das somit keine weitere Referenz auf ein anderes Modellelement E hält.

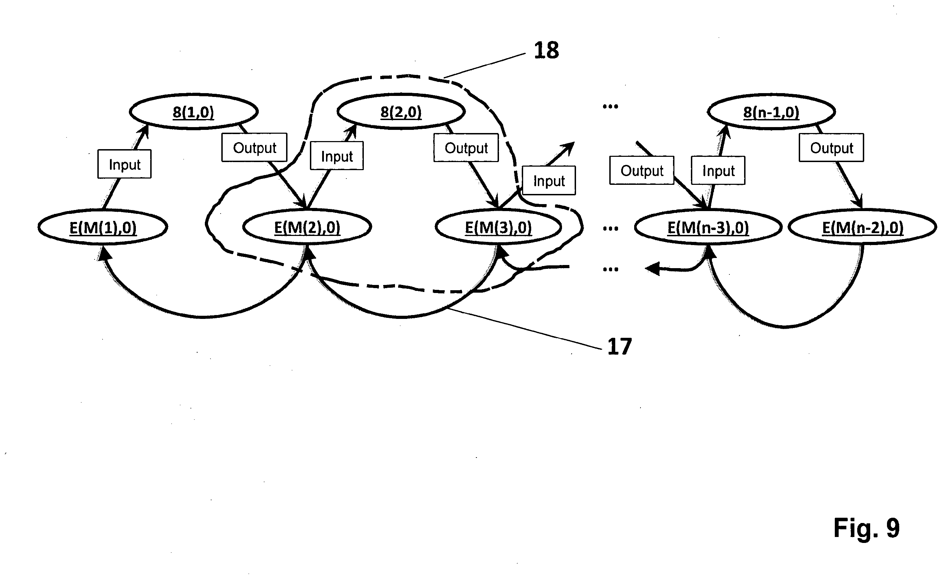

Das Verfahren bedingt es, dass bei seinem Ablauf eine Mehrzahl an Gruppen von Input-Modellelementen E(in), Output-Modellelementen E(out) und Element-Transformationen 8 gebildet werden. Jede Gruppe von Input-Modellelement E(in), Output-Modellelement E(out) und Element-Transformation 8 wird als Element-Transformations-Triple 18 bezeichnet. In Figur 9 sind zudem rückwärtsgerichtete Referenzen 17 zwischen den Modellelementen E dargestellt, welche jeweils auf vorherige Modellelemente E verweisen, die zur Erzeugung der nachfolgenden Modellelemente E geführt haben. Die Modellelemente E selbst können die Referenzen 17 halten, müssen es aber nicht. Alternativ dazu ist es auch denkbar, dass die Laufzeitumgebung 3 Informationen über die Referenzen 17 selbst vorhält. Diese Informationen müssten dann von Transformationen T und den Codegeneratoren 1 aus abfragbar sein.

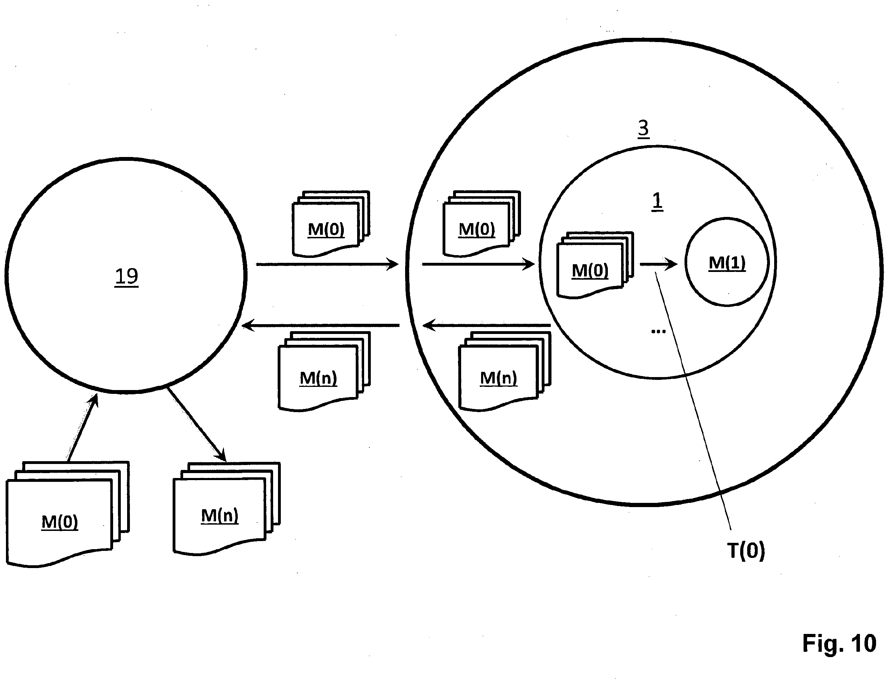

Basierend auf den vorherigen Erläuterungen ist in Figur 10 beispielhaft ein typisches Ausführungsbeispiel des erfindungsgemässen Verfahrens schematisch dargestellt. Die Laufzeitumgebung 3 für Codegeneratoren 1 implementiert das Verfahren. Um die Funktionsweise der Laufzeitumgebung 3 zu beschreiben, wird hier beispielhaft der Ablauf einer konkreten Benutzung eines Codegenerators 1 durch einen Anwender durchgespielt.

Ein Anwender benutzt die Laufzeitumgebung 3 von einem separaten Programm aus, im folgenden Generator-Client 19 genannt. Zuerst wählt der Anwender den Codegenerator 1 aus, den er benutzen möchte. Dann erstellt er ein Ausgangsmodell M(0), das die Software beschreibt, die er durch den Codegenerator 1 entwickeln lassen möchte. Das Ausgangsmodell M(0) liegt unter anderem auch in persistenter Form vor. Dieses Ausgangsmodell M(0) wird an die Laufzeitumgebung 3 übergeben. Das Verfahren ist unabhängig davon, ob das Programm der Laufzeitumgebung 3 auf demselben Computersystem wie der Generator-Client 19 ausgeführt wird oder nicht.

Jeder Codegenerator 1 beinhaltet auch eine Definition der von ihm benutzten Transformationsmodule 7 (in Figur 10 nicht dargestellt) und die Reihenfolge derer Ausführung. Die Laufzeitumgebung 3 stellt nun fest, welche Transformationsmodule 7 und welche Art von Modellen M der ausgewählte Codegenerator 1 benutzt. Auch die Reihenfolge der Ausführung der Transformationsmodule 7 wird festgestellt, da die Transformationsmodule 7 in einer bestimmten Reihenfolge abgearbeitet werden müssen.

Die erste Transformation T(0) wandelt das übergebene Ausgangsmodell M(0) in ein Startmodell M(1) um. Dieses Startmodell M(1) mit internem Format liegt transient im Speicher und dient als Eingabe für die nachfolgend auszuführenden Transformationen T. Die Laufzeitumgebung 3 stellt dabei sicher, dass zu jedem Modellelement E (in Figur 10 nicht dargestellt) des Startmodells M(1) das korrespondierende Modellelement E des Ausgangsmodells M(0) gefunden und zugeordnet werden kann. Dies wird getan, um eine lückenlose Rückverfolgung von generierten Dateien bis hin zu den Modellelementen E im Ausgangsmodell M(0) zu gewährleisten.

Die Laufzeitumgebung 3 nimmt nun das Startmodell M(1) im internen Format und übergibt es der zweiten Transformation T(1). Diese zweite Transformation T(1) gibt dann ein erstes Zwischenmodell M(1) zurück. Dieses Zwischenmodell M(1) wird dann an die dritte Transformation T(2) übergeben (in Figur 10 nicht dargestellt aber durch Punkte "..." angedeutet). Auch die dritte Transformation T(2) gibt dann ein Zwischenmodell zurück, nämlich das zweite Zwischenmodell M(2) (in Figur 10 nicht dargestellt). So werden nacheinander alle im Rahmen der jeweiligen Codegenerierung zu verwendenden Transformationen T abgearbeitet, bis das Verfahren bei der letzten Transformation T(n-1) (in Figur 10 nicht dargestellt) angekommen ist. Die letzte Transformation T(n-1) erzeugt eine Menge von Codedateien 9 (in Figur 10 nicht explizit dargestellt), die einer vorgegebenen Syntax folgen (zum Beispiel die Syntax einer Programmiersprache oder einem XML-Format). Diese Codedateien 9 bilden das Codemodell M(n) und liegen typischerweise nicht persistent im Dateisystem sondern im transienten Speicher. Erst der Generator-Client 19 schreibt das Codemodell M(n) mit den Codedateien 9 persistent ins Dateisystem.

Das Endmodell M(n-1), welches als Eingabemodell für die letzte Transformation T(n-1) dient, besteht stets aus Modellelementen E für alle strukturierten Elemente des Codemodells M(n) bzw. dessen Codedatei(en) 9, das bzw. die erzeugt werden soll(en). Mit anderen Worten: Das generierte Codemodell M(n) ist gewissermassen eine textuelle Repräsentation des letzten transienten Modells, nämlich des Endmodells M(n-1). Die Laufzeitumgebung 3 protokolliert gleichzeitig, das heisst während der letzten Transformation T(n-1), welcher Teil einer generierten Codedatei 9 durch welchen Programmteil der letzten Transformation 9 erzeugt worden ist. So entsteht typischerweise das Generierungsprotokoll.

Die erzeugten Codedateien 9, welche in ihre Gesamtheit das Codemodell M(n) bilden, werden, wie in Figur 10 gezeigt, von der Laufzeitumgebung 3 an den Generator-Client 19 zurückgegeben. Der Softwareentwickler 4 (siehe Figur 1) findet das zurückgegebene Codemodell M(n) dann in persistenter Form in seiner Arbeitsumgebung wieder. Es kann auch einen Generator-Client 19 geben, der nur zur Anzeige der Ergebnisse des Verfahrens genutzt wird. Ein solcher Generator-Client 19 würde dann typischerweise nicht zur Arbeitsumgebung des Softwareentwicklers 4 gezählt und würde die Codedateien 9 deswegen nicht ins Dateisystem schreiben. Dieser Spezialfall eines Generator-Clients soll dazu dienen, einem Anwender der Generierung über einen Web-Anwendung zu zeigen, wie generierte Codedateien aussehen würden. Dieser Fall tritt ein, wenn ein Anwender die Generierung noch nicht für seine Softwareentwicklung nutzt, sondern erst mal nur sehen möchte, was bei einer Codegenerierung herauskommen würde.

Im Folgenden wird nun noch kurz beschrieben, welche Regeln man bei der Entwicklung eines Codegenerators 1 berücksichtigen muss, damit dieser Codegenerator 1 auf der Laufzeitumgebung 3 zur Ausführung gebracht werden kann. Das Verständnis für die Entwicklung eines Codegenerators 1 verbessert das Verständnis für das Verfahren.

Damit Transformationen T durchgeführt werden können, wird ein formales Ausgangsmodell M(0) benötigt. Um solch ein Ausgangsmodell M(0) erstellen zu können, wird, beispielsweise von dem Codegenerator-Entwickler 2 oder einem Entwickler der Laufzeitumgebung des erfindungsgemässen Verfahrens, eine sogenannte Modellierungssprache entwickelt. Diese Modellierungssprache wird mit einem Modellierungswerkzeug anwendbar gemacht, das heisst, mit diesem Modellierungswerkzeug und mit der Modellierungssprache werden die benötigten formalen Ausgangsmodelle M(0) erzeugt.

Die Laufzeitumgebung 3 stellt erste Transformationsmodule 7(0) zur Ausführung von ersten Transformationen T(0) zur Verfügung, die in der Lage sind, Ausgangsmodelle M(0) die mit bestimmten Modellierungswerkzeugen erzeugt wurden, in eine transiente Repräsentation, insbesondere in Startmodelle M(1) zu transformieren. Für jedes Modellierungswerkzeug gibt es genau ein solches erstes Transformationsmodul 7(0). Diese ersten Transformationsmodule 7(0) werden typischerweise nicht von einem Codegenerator-Entwickler 2 entwickelt, sondern werden durch das Verfahren und/oder die Laufzeitumgebung 3 vorgegeben.

Um das Ergebnis des ersten Transformationsmoduls 7(0) so weiterzuverarbeiten, dass ein Input-Modell für das letzte Transformationsmodul 7(n-1) zur Ausführung von letzten Transformationen T(n-1) entsteht, muss der Codegenerator-Entwickler 2 ein oder mehrere Zwischentransformationsmodule 7 entwickeln oder wiederverwenden und die Reihenfolge der Ausführung derselben angeben.

Für jede geplante Element-Transformation 8 eines Modellelements E eines Input-Modells durch ein Transformationsmodul 7 ist ein neuer Element-Transformator zu entwickeln. Grundlage für diese Entwicklung ist, dass für jedes Transformationsmodul 7 auch ein Metamodell X für das Output-Modell entwickelt wird oder wiederverwendet wird. Wenn alle Element-Transformatoren eines Transformationsmoduls 7 nur Veränderungen an Modellelementen E vornehmen, dann wird für diese Transformation T kein neues Metamodell X benötigt, da das Metamodell X für das Input-Modell bereits existiert und dasselbe Metamodell X für das Output-Modell genutzt wird.

Bei der Entwicklung von Metamodellen X für Zwischentransformationsmodule 7 zur Ausführung der erfindungsgemässen Zwischentransformationen T(1) bis T(n-3) und ggf. der vorletzten Transformation T(n-2), muss die von der Laufzeitumgebung 3 vorgegebene Programmierschnittstelle genutzt werden.

Das Metamodell X für das Output-Modell der letzten Zwischentransformation T(n-2) ist von der Laufzeitumgebung 3 vorgegeben. Dieses Metamodell ist technologiespezifisch und kann bei Bedarf selbst erweitert werden. Es gibt zum Beispiel Metamodelle X für Java, C++, Perl, XML, usw.

Der Codegenerator-Entwickler 2 muss bereits bei der Entwicklung des letzten Zwischentransformationsmoduls festlegen, welche Dateien das letzte Transformationsmodul 7(n-1) generieren wird.

Die Laufzeitumgebung 3 gibt typischerweise bereits Transformationsmodule 7(n-1) für die letzte Transformation T(n-1) vor. Ein letztes Transformationsmodul 7(n-1) für Java kann zum Beispiel bereits Java-Quellcode generieren. Solche letzten Transformationsmodule 7(n-1) können bevorzugt vom Codegenerator-Entwickler 2 erweitert werden, um über die Standardgenerierung hinaus weiteren Quellcode oder Konfigurationscode generieren zu können. Für diese Erweiterungen muss die Programmierschnittstelle der Laufzeitumgebung 3 genutzt werden.

Folgende Bestandteile eines Codegenerators 1 muss ein Codegenerator-Entwickler 2 typischerweise bereitstellen, um ihn erfolgreich auf die erfindungsgemässe Laufzeitumgebung 3 zu bringen und dort im erfindungsgemässen Verfahren ausführbar zu machen:

| **Bestandteil** |
|---|
| Metamodell-Module für Output-Modelle |
| Name des ersten Transformationsmoduls, das zur Transformation des Ausgangsmodells genutzt werden soll |
| Mittlere Transformationsmodule |
| Letztes Transformationsmodul |
| Reihenfolge der Ausführung der Transformationsmodule in Form einer Baumstruktur, unabhängig davon, wer die Module entwickelt hat |
| Weitere Module, die vom Codegenerator-Entwickler geliefert werden |
| Abhängigkeiten von weiteren Modulen, unabhängig davon, wer die Module entwickelt hat |

Zusammenfassend kann gesagt werden, dass durch das Verfahren die vorgegebene Strukturierung des gesamten Transformationsprozesses und die gesammelten Informationen genutzt werden, indem zumindest einer der folgenden Schritte in dem Verfahren ausgeführt werden:
- Nachvollziehen, welches Modellelement E im Ausgangsmodell M(0) für die Erzeugung Welcher Quellcode- und Konfigurations-Dateien verantwortlich ist
- Bei Fehlerfällen oder Performanceproblemen die verantwortliche Transformation T schnell und sicher identifizieren - während der Entwicklung und während des Betriebes von Codegeneratoren 1
- Anwendern der Codegenerierung ermöglichen, manuelle Änderungen in generierten Codedateien 9 durchzuführen, ohne die Tatsache der automatischen Erzeugung der Codedateien 9 berücksichtigen zu müssen
- Transformationsmodule 7 und Verkettungen von Transformationsmodulen 7 maximal wiederverwendbar machen
- Änderungen der Namen von Modellelementen E bis hin zu den Namen der generierten Codedateien 9 und den Namen der strukturellen Elemente innerhalb der generierten Codedateien 9 berücksichtigen
- Zusammenhänge zwischen strukturellen Elementen in generierten Codedateien 9 und Modellelementen E herstellen, die mit dem Endmodell M(n-1) verbunden sind, das zur Generierung einer Codedatei 9 geführt hat
- Statistische Aussagen über die Anzahl der Transformationen T, Anzahl der Schritte innerhalb von Transformationen T, Anzahl der Modellelemente E in den Modellen M(1) bis M(n-1), Verhältnis der Anzahl der generierten Codedateien 9 zu der Anzahl der Modellelemente E welche die Generierung mindestens einer Codedatei 9 auslösen, Verhältnis der Anzahl struktureller Elemente in generierten Codedateien 9 im Verhältnis zur Anzahl Modellelemente im Ausgangsmodell M(0). Über diese Metriken werden Codegeneratoren untereinander vergleichbar.

Durch das erfindungsgemässe Verfahren werden unter anderem die folgenden Vorteile erreicht:
- Die industrielle Massenproduktion von qualitativ hochwertigen Codegeneratoren 1 wird ermöglicht;
- Die Anwendung eines so hergestellten Codegenerators 1 wird vereinfacht;
- Der Nutzen, den ein Anwender aus dem Einsatz eines industriell gefertigten Codegenerators 1 ziehen kann, wird maximiert.

Abschliessend sei, vor allem zu Zwecken der besseren Verständlichkeit der Erfindung, noch ein Beispiel eines Codegenerators für die Java Persistence Architecture (JPA) angeführt:
Der Codegenerator für JPA setzt sich aus den vier Transformationsschritten T(0) bis T(3) zusammen, die in der folgenden Tabelle aufgelistet sind. Das erfindungsgemässe Verfahren ist jedoch nicht auf genau vier Schritte festgelegt. Es können prinzipiell beliebig viele Schritte miteinander verkettet werden.

| Schritt | Eingabemodell | Ausgabemodell |
|---|---|---|
| T(0) | Textdateien, mit der Endung .persistence. Diese werden mit einem speziell dafür entwickelten Editor (Modellierungswerkzeug) erzeugt. | Objekt-Netz auf Basis eines Metamodells, das abhängig vom Modellierungswerkzeug ist |
| | | |
| | | |
| T(1) | Siehe Ausgabemodell von T(0) | Objekt-Netz auf Basis eines Metamodells, das vom Modellierungswerkzeug und von der zu generierenden Zielsprache Java *unabhängig* ist |
| | | |
| T(2) | Siehe Ausgabemodell von T(1) | Objekt-Netz auf Basis eines Metamodells, welches das Java-Metamodell erweitert |
| | | |
| T(3) | Siehe Ausgabemodell von T(2) | Codedateien für die Programmiersprache Java und XML-Konfigurationsdateien |
| | | |

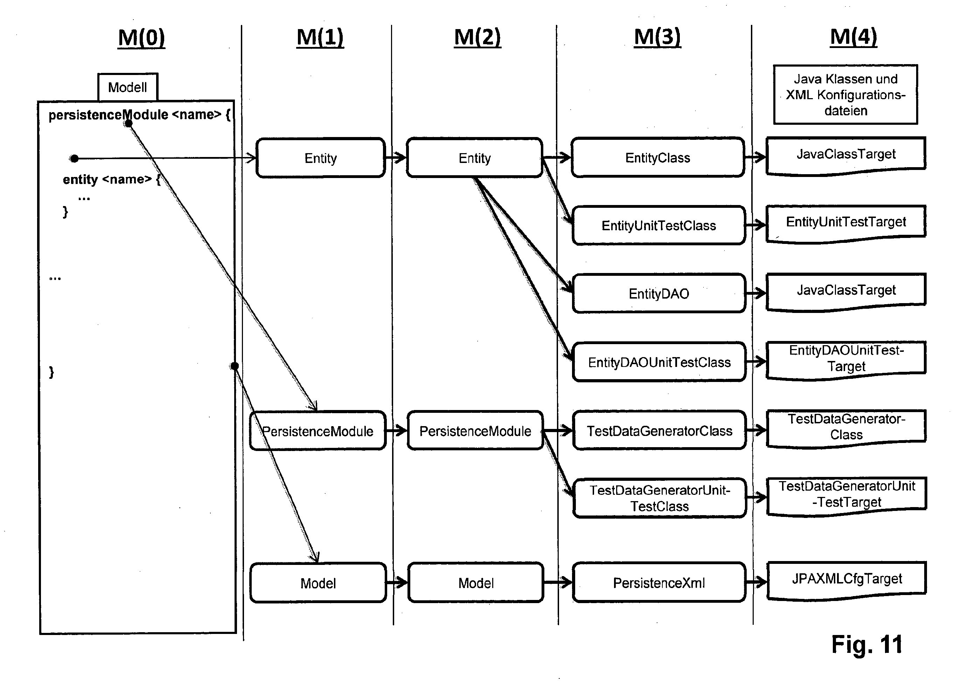

Die zentralen Elemente im Ausgangsmodell M(0) und die im Laufe der Transformationen T(0) bis T(3) erzeugten Elemente, sind in Figur 11 zu sehen. M(1) und M(2) sind in diesem Beispiel nur scheinbar identisch. Das Metamodell von M(1) hat Abhängigkeiten zum Modellierungswerkzeug während das Metamodell von M(2) *keinerlei* Abhängigkeiten zu irgendeinem Modellierungswerkzeug hat. M(2) hat wiederum keine Abhängigkeiten zu einer im Zielmodell M(4) verwendeten Technologie oder Sprache. Erst M(3) hat diese Abhängigkeiten.

Die hier beschriebenen Beispiele betreffen lediglich mögliche Ausführungsformen der Erfindung. Soweit technisch realisierbar, sind alle in den Ausführungsbeispielen gezeigten Merkmale der Erfindung miteinander kombinierbar. Der Schutzumfang wird durch die Patentansprüche bestimmt.

## Patentansprüche

1. Computerimplementiertes Verfahren zum Generieren von Computerprogrammcode aus einem Ausgangsmodell (M(0)) mit Hilfe eines Codegenerators (1), mit den Schritten:
- Umwandlung des Ausgangsmodells (M(0)) in ein Startmodell (M(1)) mittels einer ersten Transformation (T(0)),
- Umwandlung des Startmodells (M(1)) in ein Zwischenmodell (M(2)...M(n-2)) mittels einer Zwischentransformation (T(1)...T(n-3)),
- Umwandlung des Zwischenmodells (M(2)...M(n-2)) in ein Endmodell (M(n-1)) mittels einer vorletzten Transformation (T(n-2)),
- Umwandlung des Endmodells (M(n-1)) in ein Codemodell (M(n)) umfassend eine Codedatei (9) mittels einer letzten Transformation (T(n-1)),
- wobei die Zwischentransformation (T(1)...T(n-3)) durch den Codegenerator (1) vorgegeben wird,
wobei
- der Codegenerator (1) innerhalb einer Laufzeitumgebung (3) ausgeführt wird,
- wobei das Ausgangsmodell (M(0)) zu Beginn des Verfahrens von einem Generator-Client (19) an die Laufzeitumgebung (3) übermittelt wird,
- wobei das Codemodell (M(n)) gegen Ende des Verfahrens von der Laufzeitumgebung (3) an den Generator-Client (19) übermittelt wird und
- wobei die Laufzeitumgebung (3) die Arbeit des Codegenerators (1) überwacht,
**dadurch gekennzeichnet, dass**
beim Ablauf des Verfahrens ein altes Codemodell (M(n)), welches bei einem früheren Ablauf des Verfahrens erzeugt wurde und in welches nach seiner Erzeugung zumindest stellenweise Modifikationen (13, 14, 15) eingefügt wurden, derart berücksichtigt wird, dass die Modifikationen (13, 14, 15) in dem durch das Verfahren erzeugten neuen Codemodell (M(n)) erhalten bleiben,
wobei das alte Codemodell (M(n)) am Anfang des Verfahrens geparsed wird, so dass eine alte Version des Endmodells (M'(n-1)) entsteht, wobei für jedes Modellelement (E) dieser alten Version des Endmodells (M'(n-1)) temporär eine alte Modellversion entsteht, welche zumindest eine entsprechende Modifikation (13, 14, 15) enthält, falls sich die Modifikationen (13, 14, 15) auf das jeweilige Modellelement (E) ausgewirkt haben,
wobei während der letzten Transformation (T(n-1)) jeweils ein altes Modellelement (E) der alten Version des Endmodells (M'(n-1)) mit dem entsprechenden Modellelement (E) des neuen Endmodells (M(n-1)) verglichen wird, so dass im neuen Codemodell (M(n)) die Modifikationen (13, 14, 15) berücksichtigt werden.

2. Computerimplementiertes Verfahren nach Anspruch 1, **dadurch gekennzeichnet, dass** während der letzten Transformation (T(n-1)) ein Generierungsprotokoll erstellt wird, bevorzugt durch die Laufzeitumgebung (3), und/oder dass die erste Transformation (T(0)) und/oder die letzte Transformation (T(n-1)) durch die Laufzeitumgebung (3) vorgegeben werden bzw. wird.

3. Computerimplementiertes Verfahren nach einem der vorhergehenden Ansprüche, **dadurch gekennzeichnet, dass** der Codegenerator (1) aus einer Mehrzahl verfügbarer Codegeneratoren (1) derart ausgewählt wird, dass das Codemodell (M(n)) einer gewünschten Spezifikation entspricht.

4. Computerimplementiertes Verfahren nach einem der vorhergehenden Ansprüche, **dadurch gekennzeichnet, dass** das Startmodell (M(1)) und/oder das Zwischenmodell (M(2)...M(n-2)) und/oder das Endmodell (M(n-1)) während des Ablaufs des Verfahrens in einen flüchtigen Speicher geschrieben werden und/oder dass das Startmodell (M(1)) und/oder das Zwischenmodell (M(2)...M(n-2)) und/oder das Endmodell (M(n-1)) nach der Umwandlung des Endmodells (M(n-1)) in das Codemodell (M(n)) zu Analysezwecken in dem flüchtigen Speicher vorgehalten werden.

5. Computerimplementiertes Verfahren nach einem der vorhergehenden Ansprüche, **dadurch gekennzeichnet, dass** jede Transformation (T) durch ein entsprechendes Transformationsmodul (7) ausgeführt wird, wobei der Codegenerator (1) der Laufzeitumgebung (3) vorzugsweise eine Definition und/oder eine Reihenfolge und/oder einen Typ der von ihm genutzten Transformationsmodule (7) übermittelt.

6. Computerimplementiertes Verfahren nach Anspruch 5, **dadurch gekennzeichnet, dass** jedes Transformationsmodul (7) eine Mehrzahl an Element-Transformationen (8) nutzt, wobei jeder Element-Transformation (8) ein Modellelement (E) des Ausgangsmodells (M(0)) oder des Startmodells (M(1)) oder des Zwischenmodells (M(2)...M(n-2)) oder des Endmodells (M(n-1)) als Eingangsparameter vorgegeben wird, und wobei jede Element-Transformation (8) ein Modellelement (E) des Startmodells (M(1)) oder des Zwischenmodells (M(2)...M(n-2)) oder des Endmodells (M(n-1)) oder des Codemodells (M(n)) als Ausgangsparameter liefert.

7. Computerimplementiertes Verfahren nach Anspruch 6, **dadurch gekennzeichnet, dass** jedem neuen Modellelement (E) eine Referenz auf das alte Modellelement (E), aus dem es mittels der Element-Transformation (8) erzeugt wurde, zugeordnet wird, wobei die Referenzen vorzugsweise in der Laufzeitumgebung (3) vorgehalten werden.

8. Computerimplementiertes Verfahren nach einem der vorhergehenden Ansprüche, **dadurch gekennzeichnet, dass** im Generierungsprotokoll zumindest ein Verfahrensschritt der Ansprüche 2 bis 7 mit einem entsprechenden Ergebnis abgespeichert wird.

9. Computerimplementiertes Verfahren nach einem der Ansprüche 5 bis 8, **dadurch gekennzeichnet, dass** ein und dasselbe Transformationsmodul (7) in unterschiedlichen Transformationen genutzt wird und/oder dass der Codegenerator (1) ein Transformationsmodul (7) eines anderen Codegenerators (1) aus der Mehrzahl der verfügbaren Codegeneratoren (1) nutzt.

10. Computerimplementiertes Verfahren nach einem der vorhergehenden Ansprüche, **dadurch gekennzeichnet, dass** die Modelle (M) basierend auf an die Laufzeitumgebung (3) übermittelten Metamodellen (X) erzeugt werden.

11. Computerimplementiertes System: konfiguriert zur Ausführung des Verfahrens nach einem der Anspüche 1 bis 10.

12. Computerlesbares Medium, enthaltend Instruktionen die, wenn sie von einem computerimplementierten System ausgeführt werden, das computerimplementierte System steuern und/oder regeln um das Verfahren nach einem der Ansprüche 1 bis 10 auszuführen.

## Claims

1. Computer-implemented method for generating computer program code from an initial model (M(0)) by means of a code generator (1), with the steps:
- conversion of the initial model (M(0)) into a starting model (M(1)) by means of a first transformation (T(0)),
- conversion of the starting model (M(1)) into an intermediate model (M(2)...M(n-2)) by means of an intermediate transformation (T(1)...T(n-3)),
- conversion of the intermediate model (M(2)...M(n-2)) into a final model (M(n-1)) by means of a penultimate transformation (T(n-2)),
- conversion of the final model (M(n-1)) into a code model (M(n)) comprising a code file (9) by means of a last transformation (T(n-1)),
- wherein the intermediate transformation (T(1)...T(n-3)) is specified by the code generator (1),
wherein
- the code generator (1) is executed within a runtime environment (3),
- wherein the initial model (M(0)) is transmitted by a generator client (19) to the runtime environment (3) at the beginning of the method,
- wherein the code model (M(n)) is transmitted by the runtime environment (3) to the generator client (19) towards the end of the method and
- wherein the runtime environment (3) monitors the work of the code generator (1),
**characterized in that**
in the course of the method, an old code model (M(n)), which was generated during an earlier run of the method and into which modifications (13, 14, 15) were inserted after its generation at least locally, is taken into account in such a way that the modifications (13, 14, 15) are maintained in the new code model (M(n)) generated by the method,
wherein the old code model (M(n)) is parsed at the beginning of the method, so that an old version of the final model (M'(n-1)) is created, wherein for each model element (E) of this old version of the final model (M'(n -1)) a temporary old model version is created which contains at least one corresponding modification (13, 14, 15) if the modifications (13, 14, 15) have affected the respective model element (E),
wherein during the last transformation (T(n-1)) one old model element (E) each of the old version of the final model (M'(n-1)) is compared with the corresponding model element (E) of the new final model (M(n-1)), so that the modifications (13, 14, 15) are taken into account in the new code model (M(n)).

2. Computer-implemented method according to claim 1, **characterized in that** a generation protocol is created during the last transformation (T(n-1)), preferably by the runtime environment (3), and/or that the first transformation (T(0)) and/or the last transformation (T(n-1)) is/are specified by the runtime environment (3).

3. Computer-implemented method according to one of the preceding claims, **characterized in that** the code generator (1) is selected from a plurality of available code generators (1) such that the code model (M(n)) corresponds to a desired specification.

4. Computer-implemented method according to one of the preceding claims, **characterized in that** the starting model (M(1)) and/or the intermediate model (M(2)...M(n-2)) and/or the final model (M(n-1)) are written into a volatile memory during the course of the method and/or that the starting model (M(1)) and/or the intermediate model (M(2)...M(n-2)) and/or the final model (M(n-1)) are kept in the volatile memory for analysis purposes after the final model (M(n-1)) has been converted into the code model (M(n)).

5. Computer-implemented method according to one of the preceding claims, **characterized in that** each transformation (T) is carried out by a corresponding transformation module (7), wherein the code generator (1) preferably transmits to the runtime environment (3) a definition and/or a sequence and/or a type of the transformation modules (7) used by it.

6. Computer-implemented method according to claim 5, **characterized in that** each transformation module (7) uses a plurality of element transformations (8), wherein a model element (E) of the initial model (M(0)) or of the starting model (M(1)) or of the intermediate model (M(2)...M(n-2)) or of the final model (M(n-1)) is given as an input parameter to each element transformation (8), and wherein each element transformation (8) provides as output parameter a model element (E) of the starting model (M(1)) or of the intermediate model (M(2)...M(n-2)) or of the final model (M(n-1)) or of the code model (M(n)).

7. Computer-implemented method according to claim 6, **characterized in that** to each new model element (E) is assigned a reference to the old model element (E) from which it was generated by means of the element transformation (8), wherein the references are preferably kept in the runtime environment (3).

8. Computer-implemented method according to one of the preceding claims, **characterized in that** at least one method step of claims 2 to 7 is stored in the generation protocol with a corresponding result.

9. Computer-implemented method according to one of claims 5 to 8, **characterized in that** one and the same transformation module (7) is used in different transformations and/or that the code generator (1) uses a transformation module (7) of another code generator (1) of the plurality of available code generators (1).

10. Computer-implemented method according to one of the preceding claims, **characterized in that** the models (M) are generated based on metamodels (X) transmitted to the runtime environment (3).

11. Computer-implemented system configured to carry out the method according to any one of claims 1 to 10.

12. Computer-readable medium comprising instructions which, when executed by a computer-implemented system, control and/or regulate the computer-implemented system to carry out the method according to any one of claims 1 to 10.

## Revendications

1. Procédé implémenté par ordinateur destiné à générer du code de programme informatique à partir d'un modèle initial (M(0)) à l'aide d'un générateur de code (1), avec les étapes:
- conversion du modèle initial (M(0)) en un modèle de départ (M(1)) au moyen d'une première transformation (T(0)),
- conversion du modèle de départ (M(1)) en un modèle intermédiaire (M(2)...M(n-2)) au moyen d'une transformation intermédiaire (T(1)...T(n-3)),
- conversion du modèle intermédiaire (M(2)...M(n-2)) en un modèle final (M(n-1)) au moyen d'une avant-dernière transformation (T(n-2)),
- conversion du modèle final (M(n-1)) en un modèle de code (M(n)) comprenant un fichier de code (9) au moyen d'une dernière transformation (T(n-1)),
- où la transformation intermédiaire (T(1)...T(n-3)) est spécifiée par le générateur de code (1),
où
- le générateur de code (1) est exécuté dans un environnement d'exécution (3),
- où le modèle initial (M(0)) est transmis d'un client générateur (19) à l'environnement d'exécution (3) au début du procédé,
- où le modèle de code (M(n)) est transmis de l'environnement d'exécution (3) au client générateur (19) vers la fin du procédé et
- où l'environnement d'exécution (3) surveille le fonctionnement du générateur de code (1),
**caractérisé en ce que**
au cours du procédé, un ancien modèle de code (M(n)), qui a été généré lors d'une séquence précédente du procédé et dans lequel, après sa génération, des modifications (13, 14, 15) ont été insérées au moins par endroits, est pris en compte de telle sorte que les modifications (13, 14, 15) sont maintenues dans le nouveau modèle de code (M(n)) généré par le procédé,
où l'ancien modèle de code (M(n)) est analysé au début du procédé, de sorte qu'une ancienne version du modèle final (M'(n-1) soit créée, où pour chaque élément de modèle (E) de cette ancienne version du modèle final (M'(n -1)) une ancienne version du modèle est créée temporairement, qui contient au moins une modification (13, 14, 15) correspondante si les modifications (13, 14, 15) ont eu un impact sur l'élément de modèle (E) respectif,
où lors de la dernière transformation (T(n-1)) un ancien élément de modèle (E) de l'ancienne version du modèle final (M'(n-1)) à la fois est comparé à l'élément de modèle (E) correspondant du nouveau modèle final (M(n-1)), de sorte que les modifications (13, 14, 15) soient prises en compte dans le nouveau modèle de code (M(n)).

2. Procédé implémenté par ordinateur selon la revendication 1, **caractérisé en ce qu'**un protocole de génération est créé lors de la dernière transformation (T(n-1)), de préférence par l'environnement d'exécution (3), et/ou que la première transformation (T(0)) et/ou la dernière transformation (T(n-1)) est/sont spécifiée(s) par l'environnement d'exécution (3).

3. Procédé implémenté par ordinateur selon l'une des revendications précédentes, **caractérisé en ce que** le générateur de code (1) est sélectionné parmi une pluralité de générateurs de code (1) disponibles de telle sorte que le modèle de code (M(n)) corresponde à une spécification souhaitée.

4. Procédé implémenté par ordinateur selon l'une des revendications précédentes, **caractérisé en ce que** le modèle de départ (M(1)) et/ou le modèle intermédiaire (M(2)...M(n-2)) et/ou le modèle final (M(n-1)) sont écrits dans une mémoire volatile au cours du procédé et/ou que le modèle de départ (M(1)) et/ou le modèle intermédiaire (M(2)... M(n-2)) et/ou le modèle final (M(n-1)) sont conservés dans la mémoire volatile à des fins d'analyse après que le modèle final (M(n-1)) ait été converti en modèle de code (M(n)).

5. Procédé implémenté par ordinateur selon l'une des revendications précédentes, **caractérisé en ce que** chaque transformation (T) est effectuée par un module de transformation (7) correspondant, où le générateur de code (1) préférablement transmet à l'environnement d'exécution (3) une définition et/ou une séquence et/ou un type des modules de transformation (7) qu'il utilise.

6. Procédé implémenté par ordinateur selon la revendication 5, **caractérisé en ce que** chaque module de transformation (7) utilise une pluralité de transformations d'éléments (8), où un élément de modèle (E) du modèle initial (M(0)) ou du modèle de départ (M(1)) ou du modèle intermédiaire (M(2)...M(n-2)) ou du modèle final (M(n-1)) est donné à chaque transformation d'éléments (8) comme paramètre d'entrée, et où chaque transformation d'élément (8) fournit en tant que paramètre de sortie un élément de modèle (E) du modèle de départ (M(1)) ou du modèle intermédiaire (M(2)...M(n-2)) ou du modèle final (M(n-1)) ou du modèle de code (M(n)).

7. Procédé implémenté par ordinateur selon la revendication 6, **caractérisé en ce qu'**à chaque nouvel élément de modèle (E) est attribuée une référence à l'ancien élément de modèle (E), à partir duquel il a été généré au moyen de la transformation d'éléments (8), où les références sont de préférence tenues à disposition dans l'environnement d'exécution (3).

8. Procédé implémenté par ordinateur selon l'une des revendications précédentes, **caractérisé en ce qu'**au moins une étape du procédé des revendications 2 à 7 est stockée dans le protocole de génération avec un résultat correspondant.

9. Procédé implémenté par ordinateur selon l'une des revendications 5 à 8, **caractérisé en ce qu'**un même module de transformation (7) est utilisé dans différentes transformations et/ou que le générateur de code (1) utilise un module de transformation (7) d'un autre générateur de code (1) parmi la pluralité de générateurs de codes (1) disponibles.

10. Procédé implémenté par ordinateur selon l'une des revendications précédentes, **caractérisé en ce que** les modèles (M) sont générés sur la base de métamodèles (X) transmis à l'environnement d'exécution (3).

11. Système implémenté par ordinateur configuré pour mettre en oeuvre le procédé selon l'une quelconque des revendications 1 à 10.

12. Support lisible par ordinateur contenant des instructions qui, lorsqu'elles sont exécutées par un système implémenté par ordinateur, contrôlent et/ou régulent le système implémenté par ordinateur afin d'exécuter le procédé selon l'une quelconque des revendications 1 à 10.
